# EUROPÄISCHE PATENTSCHRIFT

(11) **EP 0 527 313 B1**
(45) Veröffentlichungstag und Bekanntmachung des Hinweises auf die Patenterteilung: **02.11.1994**
(21) Anmeldenummer: 92110461.8
(22) Anmeldetag: 20.06.1992
(51) Int. Cl.: E03C 1/10, F16K 27/00

(54) **Armatur für Wasserleitungen**
Accouterments for water conduits
Robinetterie pour conduits d'eau

(30) Priorität: 20.07.1991 DE 4124195
(43) Veröffentlichungstag der Anmeldung: 17.02.1993
(73) Patentinhaber: HANS SASSERATH & CO KG, D-41352 Korschenbroich (DE)
(72) Erfinder: Hecking, Willi, W-4050 Mönchengladbach 2 (DE)
(74) Vertreter: Wolgast, Rudolf, Dipl.-Chem. Dr.

(56) Entgegenhaltungen:
- EP-A- 0 117 640
- EP-A- 0 208 412
- DE-A- 3 835 144
- DE-U- 8 133 254

## Beschreibung

### Technisches Gebiet

Die Erfindung betrifft eine Armatur für Wasserleitungen mit einem Rückflußverhinderer und Absperrrmitteln zum Absperren des Wasserdurchflusses stromauf und stromab von dem Rückflußverhinderer.

Nach DIN 1988 ist es erforderlich, für geschlossene Trinkwassererwärmer einen "Rückflußverhinderer" vorzusehen. Das ist praktisch ein Rückschlagventil, welches einen Rückfluß von Wasser aus dem Trinkwassererwärmer in die Trinkwasserleitung verhindert. Nach der erwähnten DIN-Vorschrift ist es weiter erforderlich, zum Prüfen und Auswechseln des Rückflußverhinderers in erreichbarer Nähe davor und dahinter je eine Absperrvorrichtung anzubringen.

### Zugrundeliegender Stand der Technik

Es sind Armaturen bekannt, in denen der Rückflußverhinderer und die Absperrvorrichtungen in einer kompakten Armatur vereinigt sind. Üblicherweise enthält diese Armatur außerdem stromab, also erwärmerseitig von den Absperrvorrichtungen noch ein Überdruckventil. Man bezeichnet solche kombinierten Armaturen als "Sicherheitsgruppen". Solche Sicherheitsgruppen erleichtern die Installation. Für solche Sicherheitsgruppen sind verschiedene Konstruktionen bekannt.

Bei einer bekannten Sicherheitsgruppe ist ein rohrförmiges Armaturengehäuse in eine Wasserleitung eingebaut. Das Armaturengehäuse bildet ein längliches Ventilgehäuse, das mit der Längsachse des Armaturengehäuses einen spitzen Winkel einschließt. Das Ventilgehäuse bildet zwei Ventilsitze. Ein einlaßseitiger Ventilsitz beherrscht den Durchgang zwischen dem Ventilgehäuse und dem einlaßseitigen Abschnitt des Armaturengehäuses. Ein auslaßseitiger Ventilsitz beherrscht den Durchgang zwischen dem Ventilgehäuse und dem auslaßseitigen Abschnitt des Armaturengehäuses. Die Ventilsitze wirken mit je einem Niederschraubventil zusammen. Die Ventilspindeln der beiden Niederschraubventile erstrecken sich parallel zueinander und senkrecht zur Längsachse des länglichen Ventilgehäuses. In dem Ventilgehäuse sitzt zwischen den Ventilsitzen ein Rückflußverhinderer. Das Ventilgehäuse ist an einem einlaßseitigen Ende durch einen Schraubstopfen abgeschlossen. An dem Armaturengehäuse ist in Verbindung mit dem auslaßseitigen Abschnitt ein Überdruckventil vorgesehen. Bei abgesperrten Niederschraubventilen ist der Rückflußverhinderer nach entfernen des Schraubstopfens zugänglich. Eine Prüfung des Rückflußverhinderers kann dadurch erfolgen, daß der Schraubstopfen bei geschlossenem einlaßseitigen Niederschraubventil entfernt wird. Dann darf kein Wasser aus dem Trinkwassererwärmer ausfließen (Firmendruckschrift "Armaturen DIN-gerecht installiert - Ein Leitfaden durch die Installationstechnik von Sicherheitsarmaturen nach DIN 1988" der Hans Sasserath & Co. KG).

Bei einer anderen bekannten Sicherheitsgruppe ist ein in die Wasserleitung eingebautes, rohrförmiges Armaturengehäuse durch eine Trennwand mit einem Ventildurchgang in eine Einlaßkammer und eine Auslaßkammer unterteilt. Der Ventildurchgang bildet auslaßseitig einen Ventilsitz für ein federbelastetes Tellerventil. Dieses Tellerventil bildet den Rückflußverhinderer. Einlaßseitig von dem Ventildurchgang ist ein Niederschraubventil mit einem den Ventildurchgang umgebenden, an der Trennwand zur Anlage kommenden, rohrförmigen Ventilschließkörper vorgesehen. Ebenso ist auslaßseitig von dem Ventildurchgang ein Niederschraubventil mit einem rohrförmigen Ventilschließkörper vorgesehen, der den Rückflußverhinderer umschließt und um den Ventilsitz desselben herum an der Trennwand zur Anlage kommt. Auch diese Sicherheitsgruppe enthält ein Überdruckventil ("Beuth Kommentare" - Boger, Heinzmann, Otto, Radscheit "Kommentar zu DIN 1988 Teile 1 bis 8 - Technische Regeln für Trinkwasserinstallationen" Verlag Beuth Gentner).

Durch die DE-A-38 35 144 ist eine Armatur für Wasserleitungen bekannt, bei welcher ein Rückflußverhinderer in der Durchgangsbohrung eines Kugelventils angeordnet ist. In der Schließstellung, in welcher der Rückflußverhinderer durch das Kugelventil sowohl vom Einlaß als auch vom Auslaß abgetrennt ist, fluchten die Durchgangsbohrung und der Rückflußverhinderer mit einem durch einen Stopfen verschlossenen Wartungsstutzen. In einer Prüfstellung ist die Durchgangsbohrung vom Einlaß abgetrennt aber auslaßseitig mit dem Auslaß verbunden. Die "Einlaßseite" der Durchgangsbohrung steht dann mit einen Prüfstutzen in Verbindung. Auch diese Armatur enthält ein integriertes Überdruckventil.

Die bekannten Konstruktionen sind konstruktiv recht aufwendig. Bei dem Kugelventil nach der DE-A-38 35 144 erfolgt die Absperrung sehr schnell. Das kann zu unerwünschten Wasserschlägen führen.

### Offenbarung der Erfindung

Der Erfindung liegt daher die Aufgabe zugrunde, eine Armatur der eingangs genannten Art in konstruktiv einfacher Weise aufzubauen.

Erfindungsgemäß wird diese Aufgabe dadurch gelöst, daß die Absperrmittel von einem axial in einem Armaturengehäuse verstellbaren Rohrstück gebildet sind, das den Rückflußverhinderer aufnimmt und dessen Innenraum in einer Offenstellung über eine stromauf von dem Rückflußverhinderer angeordnete seitliche Öffnung mit einem Einlaß und über eine stromab von dem Rückflußverhinderer angeordnete seitliche Öffnung mit einem Auslaß in Verbindung steht, während die seitlichen Öffnungen in einer Schließstellung des Rohrstücks abgedeckt sind.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

### Kurze Beschreibung der Zeichnungen

- Fig.1: ist ein Längsschnitt einer Armatur für Wasserleitungen mit Rückflußverhinderer, Absperrvorrichtungen und Überdruckventil, und zwar in der Offenstellung der Absperrvorrichtungen.
- Fig.2: ist eine abgebrochene Schnittdarstellung und zeigt die Armatur in der Schließstellung der Absperrvorrichtungen, in welcher ein Austausch oder eine Wartung des Rückflußverhinderers stattfinden kann.
- Fig.3: ist eine abgebrochene Schnittdarstellung ähnlich Fig.2 und zeigt die Armatur in einer Prüfstellung.
- Fig.4: zeigt eine Einzelheit "X" von Fig.3.

### Bevorzugte Ausführung der Erfindung

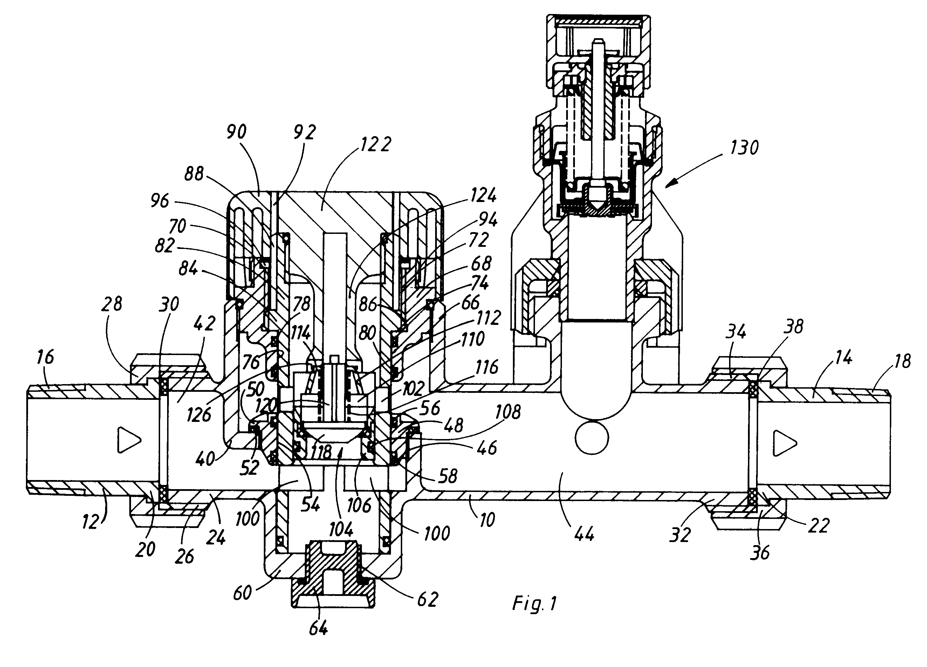

In Fig.1 ist mit 10 ein Gußgehäuse der Armatur bezeichnet. Das Gußgehäuse 10 ist im wesentlichen rohrförmig und mittels zweier Verbindungsstücke 12 und 14 in eine Wasserleitung eingebaut. Die Verbindungsstücke 12 und 14 sind mit Gewinden 16 bzw. 18 in die (nicht dargestellten) Rohre der Wasserleitung eingeschraubt. Die Verbindungsstücke 12 und 14 weisen je einen Bund 20 bzw. 22 auf. Das Gußgehäuse 10 weist einen einlaßseitigen Anschlußstutzen 24 mit einem Gewinde 26 auf. Eine Überwurfmutter 28 greift über den Bund 20 und ist auf das Gewinde 26 aufgeschraubt. Dadurch wird die Stirnfläche des Anschlußstutzens 24 unter Zwischenlage einer Dichtscheibe 30 gegen die Stirnfläche des Verbindungsstücks 12 festgezogen. In entsprechender Weise weist das Gußgehäuse 10 einen auslaßseitigen Anschlußstutzen 32 mit einem Gewinde 34 auf. Eine Überwurfmutter 36 greift über den Bund 22 und ist auf das Gewinde 34 aufgeschraubt. Dadurch wird die Stirnfläche des Anschlußstutzens 32 unter Zwischenlage einer Dichtscheibe 38 gegen die Stirnfläche des Verbindungsstücks 14 festgezogen. Die Strömung in der Wasserleitung erfolgt von dem einlaßseitigen Verbindungsstück 12, das mit dem Versorgungsnetz in Verbindung steht, zu dem auslaßseitigen Verbindungsstück 14, das mit einem geschlossenen Trinkwassererwärmer in Verbindung steht.

Das Gußgehäuse 10 wird durch eine Trennwand 40 in eine Einlaßkammer 42 und eine Auslaßkammer 44 unterteilt. Die Trennwand weist einen Durchgang 46 auf. In dem Durchgang 46 sitzt ein Führungsstück 48. Das Führungsstück 48 liegt mit einem Rand 50 unter Zwischenlage eines Dichtringes 52 um den Durchgang 46 herum auslaßseitig an der Trennwand 40 an. Das Führungsstück 48 weist eine Bohrung auf, die eine Führung 54 mit einer zylindrischen Führungsfläche bildet. In Ringnuten der Führungsfläche sitzen Dichtringe 56 und 58 in axialem Abstand voneinander.

Fluchtend mit der Führung 54 ist an dem Gußgehäuse 10 ein zylindrischer Gehäuseansatz 60 vorgesehen. Der Innendurchmesser des Gehäuseansatzes 60 ist gleich dem Innendurchmesser der zylindrischen Führungsfläche der Führung 54. Der Gehäuseansatz 60 weist eine Prüföffnung 62 in seiner Stirnfläche auf. Diese Auslaßöffnung ist durch einen Stopfen 64 verschlossen. Durch Entfernen des Stopfens kann die Prüföffnung 62 geöffnet werden.

Das Gußgehäuse 10 weist gleichachsig zu der Führung 54 und dem Gehäuseansatz 60 einen seitlichen Stutzen 66 auf. In diesem Stutzen sitzt ein Führungs- und Gewindeteil 68. Das Führungs- und Gewindeteil 68 weist eine Gewindebohrung 70 mit einem Innengewinde 72 auf. An die Gewindebohrung 70 schließt sich innen eine Schulter 74 an, die einen Anschlag bildet. Anschließend an die Schulter 74 ist in dem Führungs- und Gewindeteil 68 eine Bohrung mit einer Führungsfläche von geringerem Durchmesser vorgesehen, die eine Führung 76 bildet. Der Durchmesser der Führungsfläche der Führung 76 ist gleich dem Durchmesser der Führungsfläche der Führung 54. Die Führungen 54 und 76 fluchten miteinander und mit dem Gehäuseansatz 60. In Ringnuten der Führungsfläche sitzen in axialem Abstand voneinander Dichtringe 78 und 80.

In den Führungen 54 und 76 und in dem Gehäuseansatz 60 ist ein Rohrstück 82 axialverschieblich und drehbar geführt. Das Rohrstück 82 weist einen Bund 84 auf. Der Bund 84 ist mit einem Außengewinde 86 versehen. Das Außengewinde 86 ist in dem Innengewinde 72 der Gewindebohrung 70 geführt. Das Rohrstück 82 weist an seinem äußeren Ende (oben in Fig.1) anschließend an den Bund 84 einen Sechskant 88 auf. Auf dem Sechskant sitzt ein Drehgriff 90, der mit einem entsprechendem Innensechskant 92 versehen ist. Der Drehgriff 90 ist über eine Schnappverbindung 94 drehbar aber axial gesichert auf dem Führungs- und Gewindeteil 68 gelagert. Ein Sprengring 96 am (in Fig.1) oberen Ende des Führungs- und Gewindeteils 68 bildet einen oberen Anschlag für den Bund 84.

Das Rohrstück weist einlaßseitige, seitliche Öffnungen 100 auf. Das Rohrstück weist weiterhin axial gegen die einlaßseitigen seitlichen Öffnungen versetzt auslaßseitige seitliche Öffnungen 102 auf. Der axiale Abstand der einlaßseitigen und der auslaßseitigen seitlichen Öffnungen 100 bzw. 102 entspricht im wesentlichen dem Abstand der Führungen 54 und 76. In der in Fig.1 dargestellten "untersten" Stellung des Rohrstücks 82 steht der in Fig.1 untere Teil des Innenraumes des Rohrstücks über die seitlichen Öffnungen 100 mit der Einlaßkammer 42 in Verbindung. Der in Fig.1 obere Teil des Innenraumes des Rohrstückes 84 steht über die seitlichen Öffnungen 102 mit der Auslaßkammer 44 in Verbindung.

In das Rohrstück 82 ist ein Rückflußverhinderer 104 eingesetzt. Der Rückflußverhinderer 104 weist einen Ventilsitz 106 auf, der mittels eines Dichtringes 108 abdichtend in das Rohrstück 82 eingesetzt ist. Der Ventilsitz ist über Rippen 110 und Stege 112 mit einer Ringscheibe 114 verbunden. Die Ringscheibe 114 bildet ein Federwiderlager für eine Ventilfeder 116. Ein Ventilteller 118 mit einem Schaft 120 sitzt unter dem Einfluß der Ventilfeder 116 auf dem Ventilsitz 106 auf. Der Schaft 120 erstreckt sich dabei durch eine zentrale Öffnung der Ringscheibe 114. Der Rückflußverhinderer 104 bildet auf diese Weise eine Patrone, die als Ganzes in den Innenraum des Rohrstückes 82 eingesetzt ist.

Der Rückflußverhinderer 104 trennt den in Fig.1 oberen Teil des Innenraumes des Rohrstückes 82 von dem unteren Teil. Im Normalbetrieb fließt das Wasser aus der Einlaßkammer 42 durch die Öffnungen 100, in Durchgangsrichtung durch den Rückflußverhinderer 104 und durch die Öffnungen 102 in die Auslaßkammer 44. Der Ventilteller 118 wird dabei von dem Wasserdruck gegen die Wirkung der Ventilfeder 116 von dem Ventilsitz 106 abgehoben. Bei einem Rückfluß wird der Ventilteller 118 dagegen von dem Wasserdruck auf den Ventilsitz 106 gedrückt. Ein Rückfluß aus einem Trinkwassererwärmer in das Versorgungsnetz wird dadurch verhindert.

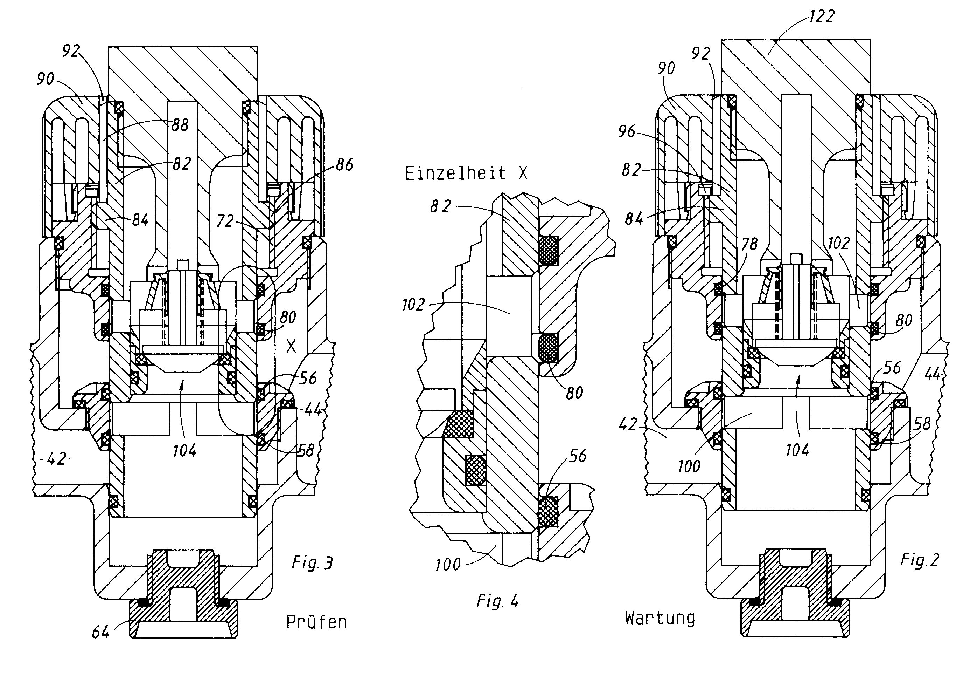

In das Rohrstück 82 ist ein Stopfen 122 von der in Fig.1 oberen Stirnseite her eingesetzt; beispielsweise ist der Stopfen 122 mit Aussengewinde versehen und in ein Innengewinde eingeschraubt. Der Stopfen 122 ist über einen Schaft 124 mit einer Schnappvorrichtung lösbar mit dem Rückflußverhinderer 104 verbunden. Die Schnappvorrichtung ist von einem federnden Rand an der inneren Stirnfläche des Schaftes gebildet, der federnd über den Rand der Ringscheibe 114 greift. Die Mantelfläche des Stopfens 122 ist in der normalen Betriebsstellung, wie sie in Fig.1 dargestellt ist, vollständig von dem Drehgriff 90 umgeben. Es ist daher nicht möglich, den Stopfen 122 herauszuziehen bzw. herauszuschrauben. Wenn das Rohrstück 82 mit dem Stopfen 122 in der Schließstellung (Fig.2) ist, ragt der Stopfen 122 über die Stirnfläche des Drehgriffs hinaus. Die Mantelfläche des Stopfens 122 ist so ausgebildet, daß sie ein Herausziehen des Stopfens 122 ermöglicht. Damit wird gleichzeitig auch der Rückflußverhinderer 104 herausgezogen. In entsprechender Weise kann der Rückflußverhinderer mittels des Stopfens 122 wieder eingesetzt werden.

Ein Überdruckventil 130 steht in Verbindung mit der Auslaßkammer 44. Der Aufbau eines solchen Überdruckventils ist an sich bekannt und daher hier nicht im einzelnen beschrieben.

Die beschriebene Anordnung wirkt wie folgt:
Die Normalstellung ist die in Fig.1 dargestellte Stellung. Das Rohrstück 82 ist in seiner in Fig.1 unteren Endstellung. Der Bund 84 liegt an der Schulter 74 an, die einen "unteren" Anschlag bildet.In dieser Normalstellung ist, wie beschrieben, die Verbindung zwischen der Einlaßkammer 42 und der Auslaßkammer 44 über die Öffnungen 100, den Rückflußverhinderer 104 und die Öffnungen 102 hergestellt.

Durch Drehen des Drehgriffs 90 wird über den Innensechskant 92 und den Sechskant 88 das Rohrstück 82 verdreht. Dadurch wird das Rohrstück 82 über das Gewinde 86 und das Innengewinde 72 nach oben in Fig.3 geschraubt. In der "oberen" Endstellung, die in Fig.2 dargestellt ist, liegt der Bund 84 an dem Sprengring 96 an, der den oberen Anschlag bildet. In dieser Schließstellung liegen die seitlichen Öffnungen 100 zwischen den Dichtringen 56 und 58. Die seitlichen Öffnungen 102 liegen zwischen den Dichtringen 78 und 80. Dadurch ist der Durchgang stromauf und stromab von dem Rückflußverhinderer 104 abgesperrt. Der Rückflußverhinderer 104 kann dann mit dem Stopfen 122 herausgezogen und gewartet oder ausgetauscht werden. Der Stopfen 122 steht in der Schließstellung über die Stirnfläche des Drehgriffs 90 vor und kann bequem ergriffen und herausgezogen werden.

Aus der Schließstellung kann der Drehgriff 90 um eine Viertelumdrehung in eine "Wartungsstellung" verdreht werden. Die Wartungsstellung ist entsprechend markiert. In der Wartungsstellung ist das Rohrstück 82 gegenüber der Schließstellung geringfügig nach unten in Fig.1 bewegt. Das ist in Fig.3 und vergrößert in Fig.4 dargestellt. In dieser Wartungsstellung ist schon ein Ringspalt zwischen dem unteren Rand der Öffnungen 102 und dem Dichtring 80 freigegeben, während die Öffnungen 100 noch vollständig zwischen den Dichtringen 56 und 58 liegen und gegen die Einlaßkammer 42 abgedichtet sind. Es wird dann eine Verbindung zwischen dem stromab von dem Rückflußverhinderer 104 gelegenen Teil des Innenraumes des Rohrstückes 84 und der Auslaßkammer 44 hergestellt. Der stromauf von dem Rückflußverhinderer 104 gelegene Teil dieses Innenraumes, der aber gegen die Einlaßkammer abgesperrt ist, kann durch Lösen des Stopfens 64 mit dem Außenraum in Verbindung gebracht werden. Es darf dann nur das in diesem Teil des Innenraumes eingeschlossene Wasser ausfließen aber kein Wasser aus dem Trinkwassererwärmer nachfließen. Dadurch kann der Rückflußverhinderer geprüft werden.

## Patentansprüche

1. Armatur für Wasserleitungen mit einem Rückflußverhinderer (104) und Absperrmitteln zum Absperren des Wasserdurchflusses stromauf und stromab von dem Rückflußverhinderer, **dadurch gekennzeichnet, daß** die Absperrmittel von einem axial in einem Armaturengehäuse verstellbaren Rohrstück (82) gebildet sind, das den Rückflußverhinderer (104) aufnimmt und dessen Innenraum in einer Offenstellung über eine stromauf von dem Rückflußverhinderer (104) angeordnete seitliche Öffnung (100) mit einem Einlaß und über eine stromab von dem Rückflußverhinderer (104) angeordnete seitliche Öffnung (102) mit einem Auslaß in Verbindung steht, während die seitlichen Öffnungen (100,102) in einer Schließstellung des Rohrstücks (82) abgedeckt sind.

2. Armatur nach Anspruch 1, **dadurch gekennzeichnet, daß**
(a) das Gehäuse durch eine Zwischenwand (40) mit einem Durchgang in eine mit dem Einlaß verbundene Einlaßkammer (42) und eine mit dem Auslaß verbundene Auslaßkammer (44) unterteilt ist,
(b) der Durchgang eine erste Führung (54) für das Rohrstück (82) bildet, welche zwei in axialem Abstand voneinander angeordnete Dichtringe (56,58) aufweist, wobei die einlaßseitige Öffnung (100) des Rohrstückes (82) in der Schließstellung zwischen diesen Dichtringen (56,58) liegt und in der Offenstellung mit der Einlaßkammer (42) i Verbindung steht, und
(c) in dem Gehäuse weiterhin gleichachsig zu der ersten Führung (54) auf der der Zwischenwand (40) gegenüberliegenden Seite der Auslaßkammer (44) eine zweite Führung (76) für das Rohrstück (82) gebildet ist, welche zwei in axialem Abstand voneinander angeordnete Dichtringe (78,80) aufweist, wobei die auslaßseitige Öffnung (102) des Rohrstückes (82) in der Schließstellung zwischen diesen Dichtringen (78,80) liegt und in der Offenstellung mit der Auslaßkammer (44) in Verbindung steht.

3. Armatur nach Anspruch 2, **dadurch gekennzeichnet, daß**
(a) der Rückflußverhinderer (104) als Patrone abdichtend und herausziehbar in das Rohrstück (82) eingesetzt ist und
(b) von der einen Stirnseite des Rohrstückes (82) her ein Stopfen (122) herausziehbar in das Rohrstück (82) eingesetzt ist, der das Innere des Rohrstückes (82) gegen den Außenraum abdichtet und lösbar mit dem Rückflußverhinderer (104) verbunden ist.

4. Armatur nach Anspruch 3, **dadurch gekennzeichnet, daß** das andere Ende des Rohrstückes (82) abdichtend in einem Gehäuseansatz (60) geführt ist, welcher durch eine verschließbare Prüföffnung (62) mit dem Außenraum verbindbar ist.

5. Armatur nach Anspruch 3, **dadurch gekennzeichnet, daß** in einer Prüfstellung zwischen der Schließ- und der Offenstellung die einlaßseitige Öffnung (100) des Rohrstückes (82) schon durch die zugehörigen Dichtringe (56,58) gegen die Einlaßkammer (42) abgeschlossen ist, während die auslaßseitige Öffnung (102) noch mit der Auslaßkammer (44) in Verbindung steht.

6. Armatur nach einem der Ansprüche 3 bis 5, **dadurch gekennzeichnet, daß**
(a) das Rohrstück (2) mit einem Außengewinde (86) in einem Innengewinde (72) des Gehäuses geführt ist und
(b) das Rohrstück (82) unverdrehbar aber längsbeweglich in einem am Gehäuse drehbar gelagerten Drehgriff (90) geführt ist.

7. Armatur nach Anspruch 6, **dadurch gekennzeichnet, daß** die Mantelfläche des Stopfens (122) in der Offenstellung des Rohrstücks (82) durch den Drehgriff (90) abgedeckt ist und erst in der Schließstellung für ein Herausziehen des Stopfens (122) zugänglich wird.

8. Armatur nach einem der Ansprüche 6 oder 7, **dadurch gekennzeichnet, daß**
(a) die erste Führung (54) in einem gesonderten Führungsstück vorgesehen ist, das abdichtend in einem Durchbruch (46) der in einem Gehäusegußteil (10) gebildeten Trennwand (40) sitzt,
(b) die zweite Führung (76) in einem Führungs- und Gewindeteil (68) vorgesehen ist, das gleichachsig zu dem Führungsstück abdichtend in einem Stutzen (66) des Gehäusegußteils (10) sitzt und gleichzeitig das Innengewinde (72) aufweist, in welchem das Außengewinde (86) des Rohrstückes (82) geführt ist.

9. Armatur nach Anspruch 8**, dadurch gekennzeichnet, daß**
(a) das Außengewinde (86) des Rohrstückes (82) auf der Mantelfläche eines Bundes (84) des Rohrstückes (82) vorgesehen ist und
(b) an dem Führungs- und Gewindeteil (68) ein äußerer und ein innerer Anschlag (96 bzw. 74) vorgesehen sind, an denen der Bund (84) beim Erreichen der Schließstellung bzw. der Offenstellung zur Anlage kommt.

10. Armatur nach einem der Ansprüche 1 bis 9, **dadurch gekennzeichnet, daß** sie ein integriertes Überdruckventil (130) stromab von den Öffnungen (100,102) aufweist.

## Claims

1. Fitting for water conduits having a backflow preventing device (104) and locking means for locking the water passage downstream and upstream of the backflow preventing device, **characterized in that** the locking means are formed by a tube element (82) axially adjustable in the housing of the fitting, which tube element accomodates the backflow preventing device (104) and the inner space of which, in an open position, communicates with an inlet through a lateral opening (100) arranged upstream of the backflow preventing device (104), and communicates with an outlet through a lateral opening (102) arranged downstream of the backflow preventing device (104), while the lateral openings (100,102) are covered in a closed position of the tube element (82).

2. Fitting as claimed in claim 1, **characterized in that**
(a) the housing is divided by a partition (40) having a passage into an inlet chamber (42) connected to the inlet and an outlet chamber (44) connected to the outlet,
(b) the passage forms a first guide (54) for the tube element (82), which guide has two axially spaced sealing rings (56,58), the inlet side opening (100) of the tube element (82) being located, in the closed position, between these sealing rings (56,58), and, in the open position, communicating with the inlet chamber (42), and
(c) furthermore, a second guide (76) for the tube element (82) is formed in the housing coaxial with the first guide (54) and on the side of the oulet chamber (44) opposite to the partition (44), which second guide has two axially spaced sealing rings (78,80), the outlet side opening (102) of the tube element (82) being located, in the closed position, between these sealing rings (78,80), and, in the open position, communicating with the outlet chamber (44).

3. Fitting as claimed in claim 2, **characterized in that**
(a) the backflow preventing device (104) is inserted as cartridge sealingly and removably in the tube element (82), and
(b) a plug (122) is removably inserted into the tube element (82) from the end side of the tube element (82), which plug seals the interior of the tube element (82) from the outside space and is detachably connected to the backflow preventing device (104).

4. Fitting as claimed in claim 3, **characterized in that** the other end of the tube element (82) is sealingly guided in a housing projection (60) arranged to be connected to the outside space through a closable examination opening (62).

5. Fitting as claimed in claim 3, **characterized in that** the inlet side opening (100) of the tube element (82) is already sealed by the associated sealing rings (56,58) from the inlet chamber (42) in an examination position between the closed and the open position, while the outlet side opening (102) still communicates with the outlet chamber (44).

6. Fitting as claimed in one of claims 3 to 5, **characterized in that**
(a) the tube element (2) is guided with a male thread (86) in a female thread (72) of the housing, and
(b) the tube element (82) is guided non-rotatably but longitudinally displaceably in a rotary handle (90) rotatably mounted at the housing.

7. Fitting as claimed in claim 6, characterized in that the peripheral surface of the plug (122) is covered by the rotary handle (90) in the open position of the tube element (82) and becomes accessible for removing the plug (122) only in the closed position.

8. Fitting as claimed in one of claims 6 or 7, **characterized in that**
(a) the first guide (54) is provided in a separated guiding element sealingly arranged in an aperture (46) of the partition (40) formed in a housing casting (10),
(b) the second guide (76) is provided in a guiding and threaded portion (68) sealingly arranged in a socket (66) of the housing casting (10) coaxially with the guiding element, and has, at the same time, the female thread (72) in which the male thread (86) of the tube piece (82) is guided.

9. Fitting as claimed in claim 8, **characterized in that**
(a) the male thread (86) of the tube piece (82) is provided on the peripheral surface of a collet (84) of the tube piece (82), and
(b) an outer and an inner stop (96 and 74, respectively) are provided at the guiding and threaded portion (68), the collet (84) engaging the stops when reaching the closed position and the open position, respectively.

10. Fitting as claimed in one of claims 1 to 9, **characterized in that** it has an integrated pressure relief valve (130) downstream of the openings (100,102).

## Revendications

1. Robinetterie pour des conduites d'eau munie d'un clapet de non-retour (104) et des moyens de fermeture destinés à fermer le passage d'eau en amont et en aval du clapet de non-retour, **caractérisée par le fait que** les moyens de fermeture sont formés par une pièce de tuyau (82) axialement ajustable dans le boîtier de robinetterie, pièce de tuyau qui recoit le clapet de non-retour (104) et dont l'espace intérieure est, dans une position ouverte, en connexion avec une entrée par une ouverture latérale (100) disposée en amont du clapet de non-retour (104), et avec une sortie par une ouverture latérale (102) disposée en aval du clapet de non-retour (104), tandis que les ouvertures latérales (100,102) sont couvertes dans une position fermée de la pièce de tuyau (82).

2. Robinetterie selon la revendication 1, **caractérisée par le fait que**
(a) le boîtier est divisé par une paroi intermédiaire (40) munie d'un passage, en une chambre d'entrée (42) reliée à l'entrée, et en une chambre de sortie (44) reliée à la sortie,
(b) le passage forme un premier guidage (54) pour la pièce de tuyau (82), guidage qui présente deux anneaux d'étanchéité (56,58) disposés en écart axial, l'ouverture (100) du côté entrée de la pièce de tuyau (82) étant disposée, dans la position fermée, entre ces anneaux d'étanchéité (56,58), et dans la position ouverte, elle est en connexion avec la chambre d'entrée (42), et
(c) en outre, un second guidage (76) pour la pièce de tuyau (82) est formé dans le boîtier équiaxialement au premier guidage (54) sur le côté de la chambre de sortie (44) qui est opposé à la paroi intermédiaire (40), guidage qui présente deux anneaux d'étanchéité (78,80) disposés en écart axial, l'ouverture (102) du côté sortie de la pièce de tuyau (82) étant disposée, dans la position fermée, entre ces anneaux d'étanchéité (78,80), et dans la position ouverte, elle est en connexion avec la chambre de sortie (44).

3. Robinetterie selon la revendication 2, **caractérisée par le fait que**
(a) le clapet de non-retour (104) est introduit comme cartouche dans la pièce de tuyau de sorte à être étanchant et susceptible d'être retiré, et
(b) un bouchon est introduit dans la pièce de tuyau (82) depuis le front de la pièce de tuyau (82) de sorte à pouvoir être retiré, bouchon qui étanche l'intérieur de la pièce de tuyau (82) contre l'espace extérieur et qui est relié au clapet de non-retour (104) de manière détachable.

4. Robinetterie selon la revendication 3, **caractérisée par le fait que** l'autre extrémité de la pièce de tuyau (82) est guidée de manière étanchante dans un talon de boîtier (60) susceptible d'être relié à l'espace extérieur par une ouverture d'examen susceptible d'être fermée.

5. Robinetterie selon la revendication 3, **caractérisée par le fait que,** dans une position d'examen entre la position fermée et la position ouverte, l'ouverture (100) du côté entrée de la pièce de tuyau (82) est déjà fermée par les anneaux d'étanchéité (56,58) associés, contre la chambre d'entrée (42), tandis que l'ouverture (102) du côté de sortie est encore en connexion avec la chambre de sortie (44).

6. Robinetterie selon l'une des revendications 3 à 5, **caractérisée par le fait que**
(a) la pièce de tuyau (2) est guidée avec un filet extérieur (86) dans un filet intérieur (72) du boîtier, et
(b) la pièce de tuyau (82) est guidée dans une poignée rotative (90) montée rotativement au boîtier de sorte à être non-rotative mais longitudinalement mobile.

7. Robinetterie selon la revendication 6, **caractérisée par le fait que** la surface circonférentielle du bouchon (122) est couverte, dans la position ouverte de la pièce de tuyau (82), par la poignée rotative (90), et ne devient accessible pour retirer le bouchon (122) que dans la position fermée.

8. Robinetterie selon l'une des revendications 6 ou 7, **caractérisée par le fait que**
(a) le premier guidage (54) est prévu dans une pièce de guidage séparée disposée de manière étanchante dans un percement (46) de la paroi séparatrice (40) formée dans un élément de boîtier en fonte (10),
(b) le second guidage (76) est prévu dans un élément fileté de guidage (68) disposé équiaxialement à la pièce de guidage de manière étanchante dans un manchon (66) de l'élément de boîtier en fonte (10), et présentant en même temps le filet intérieur (72) dans lequel est guidé le filet extérieur (86) de la pièce de tuyau.

9. Robinetterie selon la revendication 8, **caractérisée par le fait que**
(a) le filet extérieur (86) de la pièce de tuyau (82) est prévu sur la surface circonférentielle d'une écharpe (84) de la pièce de tuyau (82), et
(b) une butée intérieure et une butée extérieure (96 et 74) sont prévues sur l'élément fileté de guidage (68), butées auxquelles s'appliquent l'écharpe (84) en atteignant à la position fermée ou ouverte.

10. Robinetterie selon l'une des revendications 1 à 9, **caractérisée par le fait que**'elle présente une soupape de sûreté integrée (130) en aval des ouvertures (100,102).
